# EUROPEAN PATENT APPLICATION

(11) **EP 4 641 945 A1**
(43) Date of publication of application: **29.10.2025**
(21) Application number: 25171699.9
(22) Date of filing: 22.04.2025
(51) Int. Cl.: H04B 7/185

(54) **METHOD OF OPERATION OF A USER EQUIPMENT COMMUNICATING WITH SATELLITE**

(30) Priority: 23.04.2024 KR 20240054281; 17.07.2024 KR 20240094405
(71) Applicant: Samsung Electronics Co., Ltd., Suwon-si, Gyeonggi-do 16677 (KR)
(72) Inventor: OH, Jinwoo, 16677 Suwon-si (KR); KIM, Jinho, 16677 Suwon-si (KR)
(74) Representative: Marks & Clerk LLP

(57) **Abstract**

An operation method of a user equipment (UE) communicating with a satellite in a non-terrestrial network includes receiving a reference signal assigned to the UE from the satellite that communicates via wideband with the UE in the non-terrestrial network, performing an interference measurement operation on the reference signal in a second target subband other than a first target subband allocated to the UE in the wideband, performing a channel measurement operation for the first target subband based on the reference signal and an interference measurement result from the interference measurement operation, and performing a communication operation based on a channel measurement result from the channel measurement operation.

## Description

### BACKGROUND

Methods, apparatuses, and devices consistent with the present disclosure relate to a user equipment (UE) that communicates with a satellite in a non-terrestrial network (NTN) and an operation method of the UE.

With advancements in wireless communication systems, research has been conducted on NTN communication technology for expanding communication coverage across the globe by combining satellite communication with mobile communication. An NTN aims to provide wide-area service coverage by establishing a serviceable area even in locations where it is physically impossible or economically infeasible to install base stations for mobile communication.

### SUMMARY

It is an aspect to provide a user equipment (UE) and operation method thereof, which are capable of performing a highly reliable channel measurement operation by taking into account interference to a reference signal.

According to an aspect of one or more embodiments, there is provided an operation method comprising receiving a reference signal assigned to a user equipment (UE) from a satellite that communicates via wideband with the UE in a non-terrestrial network; performing an interference measurement operation on the reference signal in a second target subband other than a first target subband allocated to the UE in the wideband; performing a channel measurement operation for the first target subband based on the reference signal and an interference measurement result from the interference measurement operation; and performing a communication operation based on a channel measurement result from the channel measurement operation.

According to another aspect of one or more embodiments, there is provided an operation method comprising receiving a reference signal assigned to a user equipment (UE) from a satellite that communicates via wideband with the UE in a non-terrestrial network; extracting, from the reference signal, a first target subband reference signal in a first target subband that is allocated to the UE in the wideband; performing a channel measurement operation for the first target subband based on the first target subband reference signal that has been extracted; and performing a communication operation based on a channel measurement result from the channel measurement operation.

According to yet another aspect of one or more embodiments, there is provided an operation method comprising receiving, from a satellite that communicates via wideband with a user equipment (UE) in a non-terrestrial network, a reference signal assigned to the UE, the wideband comprising a first target subband allocated to the UE and a plurality of second target subbands; generating a first channel measurement result corresponding to the first target subband based on the reference signal in the first target subband; interpolating the first channel measurement result based on whether there is interference to the reference signal in the plurality of second target subbands; and performing a communication operation based on the first channel measurement result that has been interpolated.

According to yet another aspect of one or more embodiments, there is provided a user equipment (UE) comprising a radio frequency (RF) circuit configured to receive, via wideband from a satellite in a non-terrestrial network, a reference signal that is assigned to the UE; and a processor configured to perform a channel measurement operation for a first target subband allocated to the UE, based on whether there is interference to the reference signal in a plurality of second target subbands other than the first target subband in the wideband.

At least some of the above and other features of the invention are set out in the claims.

### BRIEF DESCRIPTION OF THE DRAWINGS

Various embodiments will be more clearly understood from the following detailed description taken in conjunction with the accompanying drawings, in which:
FIG. 1 is a diagram illustrating a wireless communication system according to an embodiment;
FIG. 2 is a block diagram of a user equipment (UE) according to an embodiment;
FIG. 3 is a flowchart of an operation method of a UE in a wireless communication system, according to an embodiment;
FIGS. 4A and 4B are flowcharts illustrating an example of a channel measurement operation and a communication operation of the operation method of FIG. 3, according to some embodiments;
FIG. 5 is a diagram illustrating a wideband and subbands, according to an embodiment;
FIG. 6 is a flowchart of an operation method of a UE, according to an embodiment;
FIG. 7 is a flowchart of an operation method of a UE, according to an embodiment;
FIG. 8 is a diagram illustrating an example of using a reference signal in second target subbands in conjunction with the operation method of FIG. 7, according to an embodiment;
FIG. 9 is a flowchart of an operation method of a UE, according to an embodiment;
FIG. 10 is a flowchart of an operation method of a UE, according to an embodiment;
FIG. 11 is a diagram illustrating an example of using a reference signal in second target subbands in conjunction with the operation method of FIG. 10, according to an embodiment;
FIG. 12 is a flowchart of an operation method of a UE, according to an embodiment;
FIG. 13 is a diagram illustrating an example of using a reference signal in second target subbands in conjunction with the operation method of FIG. 12, according to an embodiment;
FIG. 14 is a flowchart of an operation method of a UE, according to an embodiment;
FIG. 15 is a flowchart of an operation method of a UE in a wireless communication system, according to an embodiment;
FIG. 16 is a diagram illustrating an example of not using a reference signal in second target subbands in conjunction with the operation method of FIG. 15, according to an embodiment;
FIG. 17 is a flowchart of an operation method of a UE in a wireless communication system, according to an embodiment;
FIG. 18 is a diagram illustrating a wideband according to an embodiment;
FIG. 19 is a flowchart of an operation method of a UE in a wireless communication system, according to an embodiment;
FIG. 20 is a block diagram of an electronic device according to an embodiment; and
FIG. 21 is a diagram illustrating communication devices for performing a channel measurement operation, according to an embodiment.

### DETAILED DESCRIPTION

As described above, non-terrestrial network (NTN) communication technology is capable of supporting various cell operation methods. For example, NTN communication technology may support a cell operation method in which a single satellite provides network communication to a plurality of cells by using a beamforming technique. In this case, there is a technical limitation in that the beamforming technique in the satellite is not sophisticated enough to ideally separate spaces corresponding to the plurality of cells, and thus, there is a disadvantage in that interference between the plurality of cells may occur due to this technical limitation.

In order to prevent degradation of communication performance due to interference between a plurality of cells, a resource scheduling method for allocating different subbands for transmitting downlink signals (e.g., physical downlink shared channels (PDSCHs)) to the plurality of cells has been introduced, but the method has a disadvantages in that it is difficult to accurately measure channel quality due to interference between a downlink signal and a reference signal transmitted via a wideband having a wider bandwidth than a subband.

According to various embodiments, a user equipment (UE) and operation method thereof is provided, which are capable of performing a highly reliable channel measurement operation by taking into account interference to a reference signal.

Hereinafter, various embodiments are described in detail with reference to the accompanying drawings. As used in this specification, a phrase using the form "at least one of A, B, or C" includes within its scope "only A", "only B", "only C", "A and B", "A and C", "B and C" and "A, B, and C."

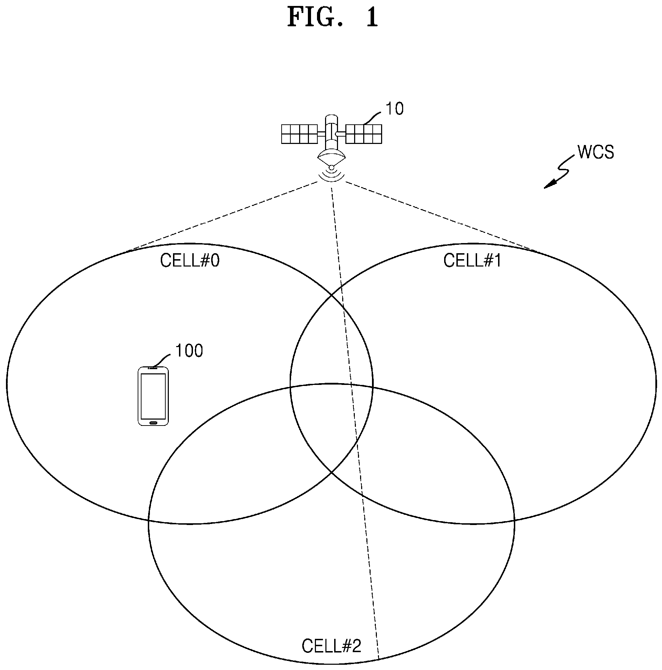

FIG. 1 is a diagram illustrating a wireless communication system (or WCS) according to an embodiment. The wireless communication system may support a communication service based on at least one of a plurality of wireless networks by using a non-terrestrial network (NTN). For example, the plurality of wireless networks may include a 3rd generation (3G) network, a 4th generation (4G) network, a 5th generation (5G) network, a 6th generation (6G) network, a wireless local area network (WLAN), etc.

Various functions described hereinafter may be implemented or supported by artificial intelligence (AI) technology or one or more computer programs, each of which includes computer-readable program code and is executable on a computer-readable medium. As used herein, terms "application" and "program" refer to one or more computer programs, software components, a set of instructions, procedures, functions, objects, classes, instances, associated data, or parts thereof, which are suitable for implementation in suitable computer-readable program code. The term "computer-readable program code" may include all types of computer code including source code, object code, and/or executable code. The term "computer-readable medium" includes any type of medium that is accessible by a computer, such as read-only memory (ROM), random access memory (RAM), a hard disk drive (HDD), a compact disc (CD), a digital video disc (DVD), or any other type of memory. "Non-transitory" computer-readable media exclude wired, wireless, optical, or other communication links through which transient electrical or other signals are transmitted. The non-transitory computer-readable media include media on which data may be permanently stored and media on which data may be stored and then overwritten, such as rewritable optical disks or erasable memory devices.

In various embodiments described below, hardware-based approaches are described as an example. However, because embodiments include a technology using both hardware and software, the various embodiments are not intended to exclude a software-based approach.

Referring to FIG. 1, the wireless communication system (WCS) may include a satellite 10 and a user equipment (UE) 100. The wireless communication system may also be referred to as a non-terrestrial wireless communication system. Although only the satellite 10 for providing a communication service to the UE 100 is illustrated in FIG. 1, the wireless communication system may further include at least one of a gateway, a data network, a network entity, or a network node to control or assist in operation of the satellite 10. In this specification, the various embodiments are described with a focus on signaling between the satellite 10 and the UE 100, but this is only for aiding in the understanding and embodiments not limited thereto.

In an embodiment, the satellite 10 may distinguish between a first cell CELL#0, a second cell CELL#1, and a third cell CELL#2 based on a beamforming technique and communicate with the first to third cells CELL#0, CELL#1, and CELL#2 to communicate with the UE 100. The UE 100 may be connected to any one of the first to third cells CELL#0, CELL#1, and CELL#2 depending on its location and perform communication therewith. It is hereinafter assumed that the UE 100 is located within coverage of the first cell CELL#0 and is connected to the first cell CELL#0.

Moreover, due to limitations of the beamforming technology used in the satellite 10, coverage areas of the first to third cells CELL#0, CELL#1, and CELL#2 may partially overlap with each other. In order to minimize the effect of interference between the first to third cells CELL#0, CELL#1, and CELL#2 due to such a coverage overlap, the satellite 10 may allocate different subbands respectively to the first to third cells CELL#0, CELL#1, and CELL#2 and transmit downlink signals via the different subbands. As a specific example, the satellite 10 may allocate a first subband to the first cell CELL#0, a second subband to the second cell CELL#1, and a third subband to the third cell CELL#2. In this case, the satellite 10 may transmit a first physical downlink shared channel (PDSCH) to the UE 100 located in the coverage area of the first cell CELL#0 via the first subband, transmit a second PDSCH to another UE located in coverage area of the second cell CELL#1 via the second subband, and transmit a third PDSCH to another UE located in coverage area of the third cell CELL#2 via the third subband.

The satellite 10 may transmit, to the UE 100, a reference signal assigned to the UE 100 via wideband including the first to third subbands. As a specific example, the satellite 10 may transmit, to the UE 100, a reference signal including reference signal symbols allocated to the UE 100 by arranging the reference signal symbols to have a pattern in the wideband. In some embodiments, the pattern may be predetermined.

As used herein, a wideband is a band including resources (or frequency-time resources) on which a reference signal assigned to the UE 100 is arranged, and may include a plurality of subbands. The wideband may be configured differently depending on the type of a reference signal.

In an embodiment, when the wireless communication system supports a long-term evolution (LTE) network-based radio access technology (RAT), the reference signal may correspond to a cell-specific reference signal (CRS), and when the wireless communication system supports a new radio (NR) network-based RAT, the reference signal may correspond to a tracking reference signal (TRS). However, these examples are merely an embodiment, and embodiments not limited thereto and may be applied to various reference signals transmitted via a wideband having a wider bandwidth than a subband allocated to each cell.

As used herein, the first subband being allocated to the first cell CELL#0 connected to a UE 100 may be referred to as the first subband being allocated to the UE 100. Furthermore, as used herein, a subband allocated to the UE 100 among the subbands included in the wideband may be referred to as a first target subband, and at least one subband that is not allocated to the UE 100 may be referred to as a second target subband. In some embodiments, a second target subband may be defined as a subband that is proximate to the first target subband within a certain distance along a frequency axis.

The UE 100 may perform a channel measurement operation for the first subband (or the first target subband) based on a reference signal received via the wideband. The reference signal used by the UE 100 may include a reference signal in the second subband (or the second target subband) allocated to the second cell CELL#1 and a reference signal in the third subband (or the second target subband) allocated to the third cell CELL#2. As used herein, a reference signal in the second target subband may be defined as including reference signal symbols arranged in the second target subband. As used herein, a channel measurement operation may include at least one of an operation of estimating a channel for decoding a downlink signal (or a PDSCH) received from the satellite 10 or an operation of measuring various parameters related to a channel state in order to generate channel state information to be reported to the satellite 10.

However, for example, when the second cell CELL#1 that is operated independently of the first cell CELL#0 is transmitting a second PDSCH via the second subband (or the second target subband) allocated to the second cell CELL#1, a reference signal in the second subband (or the second target subband) may experience interference by the second PDSCH, and in this case, the reference signal in the second subband (or the second target subband) may not be suitable for use by the UE 100 in a channel measurement operation for the first subband (or the first target subband).

Thus, according to an embodiment, the UE 100 may perform a channel measurement operation for the first subband (or the first target subband) based on whether there is interference to the reference signal in the second subband and third subband (or the second target subbands).

In an embodiment, the UE 100 may measure interference to the reference signal in each of the second target subbands to generate an interference measurement value and compare the interference measurement value with a threshold to determine whether interference is present.

In an embodiment, the UE may use the reference signal in a second target subband in which the interference is determined to be absent in the channel measurement operation for the first target subband.

In an embodiment, the UE 100 may not use the reference signal in a second target subband in which the interference is determined to be present in the channel measurement operation for the first target subband. As used herein, a reference signal that is not used for the channel measurement operation for the first target subband may be defined as an invalid reference signal. In some embodiments, the UE 100 may use the reference signal in the second target subband in which the interference is determined to be present and a weight corresponding thereto in performing the channel measurement operation for the first target subband. In some embodiments, the weight may be predetermined.

In this way, the UE 100 may selectively limit the use of the reference signal in the second target subband in the channel measurement operation for the first target subband, based on whether the interference to the reference signal in the second target subband is present.

In an embodiment, the UE 100 may fundamentally block the use of the reference signal in the second target subbands in performing the channel measurement operation for the first target subband. As a specific example, the UE 100 may extract a reference signal in the first target subband from the reference signal received via the wideband, and perform a channel measurement operation for the first target subband by using only the extracted reference signal.

According to an embodiment, the UE 100 may generate a channel measurement result with high reliability by performing a channel measurement operation for the first target subband in consideration of interference to the reference signal in the second target subband. Accordingly, communication performance of the UE 100 based on the channel measurement result with high reliability may be improved.

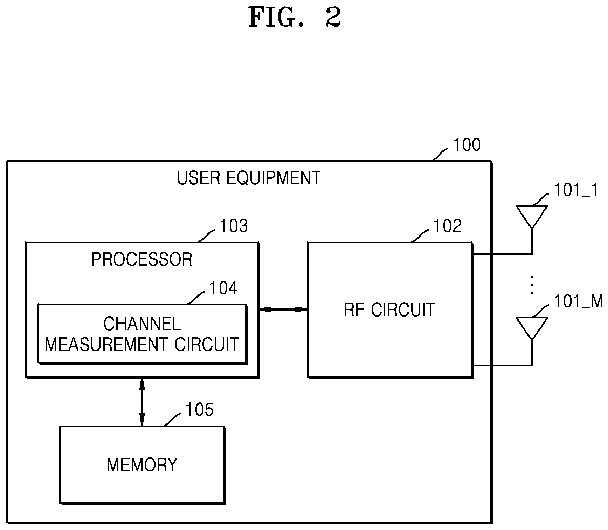

FIG. 2 is a block diagram of the UE 100 according to an embodiment.

Referring to FIG. 2, the UE 100 may include a plurality of antennas 101_1 to 101_M, a radio frequency (RF) circuit 102, a processor 103, and a memory 105. An implementation example of the UE 100 illustrated in FIG. 2 is merely an example, and the UE 100 is not limited thereto and may include more components than those shown in FIG. 2. In some embodiments, the RF circuit 102 may be referred to as an RF integrated circuit.

The RF circuit 102 may perform functions for transmitting and receiving signals via a radio channel by using the plurality of antennas 101_1 to 101_M. In detail, the RF circuit 102 may generate an RF signal by performing digital-to-analog conversion and frequency up-conversion on a baseband signal provided from the processor 103 and transmit the RF signal via the plurality of antennas 101_1 to 101_M. The RF circuit 102 may generate a baseband signal by performing frequency down-conversion and analog-to-digital conversion on an RF signal received via the plurality of antennas 101_1 to 101_M and provide the baseband signal to the processor 103.

In some embodiments, the RF circuit 102 may include a transmission filter, a reception filter, a power amplifier, a low-noise amplifier, a mixer, an oscillator, a digital-to-analog converter (DAC), an analog-to-digital converter (ADC), etc. In some embodiments, the RF circuit may further include a plurality of RF chains and perform beamforming using the plurality of antennas 101_1 to 101_M. For the beamforming, the RF circuit 102 may adjust a phase and a magnitude of each of the signals transmitted and received via the plurality of antennas 101_1 to 101_M. The RF circuit 102 may perform a multiple-input multiple-output (MIMO) operation and receive multiple layers when performing the MIMO operation.

The processor 103 may control all operations of the UE 100. In an embodiment, the processor 103 may include a channel measurement circuit 104 that performs a channel measurement operation for a first target subband in consideration of whether there is interference to a reference signal in a second target subband. In FIG. 2, the channel measurement circuit 104 is illustrated as being included in the processor 103 as a hardware component, but embodiments are not limited thereto, and in some embodiments, the channel measurement circuit 104 may be implemented as software and stored in the memory 105 in the form of code executed by the processor 103.

In an embodiment, the memory 105 may store data generated when the channel measurement circuit 104 performs a channel measurement operation for the first target subband.

In an embodiment, the channel measurement circuit 104 may receive a reference signal from the RF circuit 102 that is received via a wideband by the RF circuit 102, and perform a channel measurement operation for the first target subband based on whether there is interference to the reference signal in second target subbands of the wideband.

In an embodiment, the channel measurement circuit 104 may measure interference to the reference signal for each of the second target subbands. For example, the channel measurement circuit 104 may generate a signal to interference plus noise ratio (SINR) of the reference signal in each second target subband as an interference measurement value. In some embodiments, for example, the channel measurement circuit 104 may generate a noise interference variance (NIV) of the reference signal in each second target subband as an interference measurement value.

In an embodiment, the channel measurement circuit 104 may determine, for each of the second target subbands, whether there is interference to the reference signal in the second target subband based on interference measurement values corresponding to the second target subband. For example, the channel measurement circuit 104 may compare an interference measurement value corresponding to second target subband with a threshold, and determine, based on a result of the comparison, whether there is interference to the reference signal in the corresponding second target subband. As a specific example, in some embodiments, when an SINR measurement value for the reference signal in a second target subband is less than or equal to a threshold, the channel measurement circuit 104 may determine that there is interference to the reference signal in the second target subband. **In** some embodiments, when an NIV measurement value for the reference signal in a second target subband greater than other threshold, the channel measurement circuit 104 may determine that there is interference to the reference signal in the second target subband.

In an embodiment, the channel measurement circuit 104 may perform a channel measurement operation for the first target subband by using the reference signal in a second target subband in which interference is determined to be absent. As a specific example, in some embodiments, the channel measurement operation performed by the channel measurement circuit 104 for the first target subband may include operations of generating a first channel measurement result by performing a first channel measurement operation based on a reference signal in the first target subband, generating a second channel measurement result by performing a second channel measurement operation based on the reference signal in a second target subband in which interference is determined to be absent, and interpolating the first channel measurement result based on the second channel measurement result. When there are a plurality of second target subbands in which interference is determined to be absent, the channel measurement operation performed by the channel measurement circuit 104 for the first target subband may include operations of generating second channel measurement results corresponding to the plurality of second target subbands and interpolating the first channel measurement result based on the second channel measurement results.

In an embodiment, the channel measurement circuit 104 may process the reference signal in a second target subband in which interference is determined to be present as invalid so that the reference signal may not be used in the channel measurement operation for the first target subband.

In some embodiments, the channel measurement circuit 104 may apply a weight to a second channel measurement result generated based on the reference signal in the second target subband in which interference is determined to be present, and use a weighted second channel measurement result in the channel measurement operation for the first target subband. As a specific example, in some embodiments, the channel measurement operation performed by the channel measurement circuit 104 for the first target subband may include generating a first channel measurement result by performing a first channel measurement operation based on a reference signal in the first target subband, generating a second channel measurement result by performing a second channel measurement operation based on the reference signal in one second target subband in which the interference is determined to be absent, generating a third channel measurement result by performing a third channel measurement operation based on the reference signal in the other second target subband in which the interference is determined to be present, applying a weight to the third channel measurement result, and interpolating the first channel measurement result based on the second channel measurement result and a weighted third channel measurement result. In an embodiment, the memory 105 may store information regarding the weights used by the channel measurement circuit 104.

In connection with the above, in some embodiments, the channel measurement circuit 104 may apply a different weight to the second channel measurement result according to an interference measurement value for the reference signal in the second target subband in which interference is determined to be present. For example, the memory 105 may store a weight-related table, and the channel measurement circuit 104 may refer to the weight-related table from the memory 105 to select a weight corresponding to the second target subband in which interference is determined to be present.

In an embodiment, the channel measurement circuit 104 may identify positions of the second target subbands on the frequency axis in order to measure interferences to the reference signal in the second target subbands. For example, the channel measurement circuit 104 may receive target information regarding the second target subbands from the satellite 10 of FIG. 1 and identify the second target subbands based on the target information. As used herein, identifying the second target subbands may be understood as identifying the positions of the second target subbands on the frequency axis. The memory 105 may store the target information, and the target information may be updated periodically or aperiodically by the satellite 10 of FIG. 1.

In an embodiment, the channel measurement circuit 104 may generate capability information including information indicating that the UE 100 supports a function of performing the channel measurement operation for the first target subband based on the presence of interference in the second target subbands when a reference signal is received via the wideband, i.e., a channel measurement function based on the reference signal in the wideband. The channel measurement circuit 104 may transmit the capability information to the satellite 10 of FIG. 1 by using the RF circuit 102. The satellite 10 of FIG. 1 may perform a setup operation for communication with the UE 100, such as scheduling resources for the UE 100, based on the capability information.

In an embodiment, the channel measurement circuit 104 may adaptively set the threshold for determining whether there is interference to the reference signal in the second target subbands. For example, in an embodiment, the channel measurement circuit 104 may set the threshold based on an interference measurement value for the reference signal in the first target subband. As a specific example, in some embodiments, the channel measurement circuit 104 may set the threshold to actively utilize the reference signal in the second target subbands when the interference measurement value for the reference signal in the first target subband indicates a high interference environment. On the other hand, the channel measurement circuit 104 may set the threshold to passively utilize the reference signal in the second target subbands when the interference measurement value for the reference signal in the first target subband indicates a low interference environment. In some embodiments, the threshold may be preset to be used on a fixed basis. In an embodiment, the memory 105 may store information regarding thresholds used by the channel measurement circuit 104.

In some embodiments, the operation of the channel measurement circuit 104 described with reference to FIG. 2 may be understood as the operation of the processor 103 or the operation of the UE 100.

According to an embodiment, the UE 100 may adaptively utilize the reference signal arranged in the wideband according to a channel environment by performing a channel measurement operation for the first target subband in consideration of whether there is interference to the reference signal in the second target subbands. As a result, the UE 100 may perform an optimal channel measurement operation for the first target subband according to the channel environment.

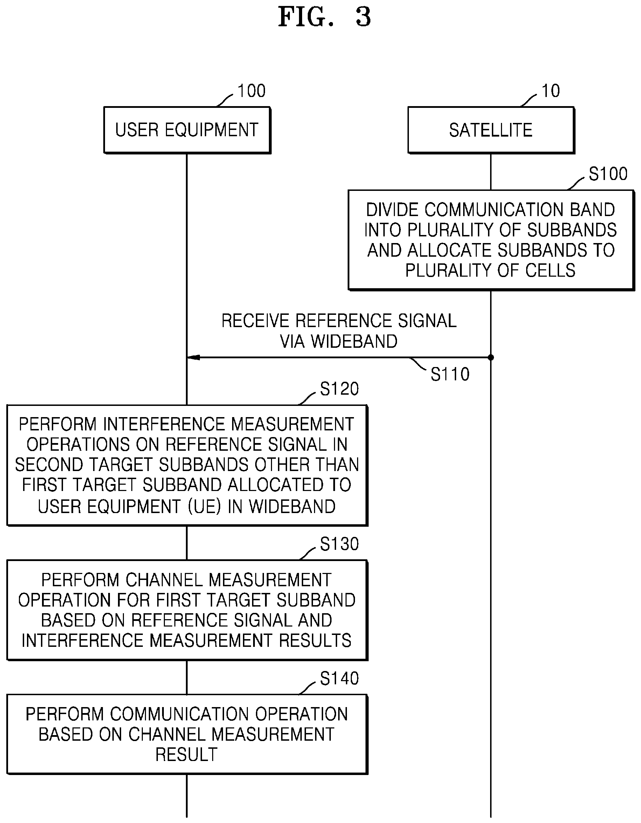

FIG. 3 is a flowchart of an operation method of a UE in a wireless communication system, according to an embodiment. The wireless communication system in FIG. 3 may include the UE 100 and the satellite 10.

Referring to FIG. 3, in operation S100, the satellite 10 may divide a communication band into a plurality of subbands and allocate the plurality of subbands to a plurality of cells. In an embodiment, the satellite 10 may provide the plurality of cells for communication with the UE 100 over an NTN. For example, the satellite 10 may be connected to a gateway through a feeder link, and the satellite 10 may be connected to a data network via the connected gateway to provide a plurality of cells under the control of the data network. The satellite 10 may serve as a relay between the UE 100 and the data network.

In operation S110, the UE 100 may receive a reference signal via a wideband. In an embodiment, a reference signal is a signal assigned to enable the UE 100 to perform a channel measurement operation for a first target subband, and may include reference signal symbols arranged in a pattern on resources included in the wideband. In an embodiment, the pattern may be predetermined. In an embodiment, the wideband may be the same as the communication band in operation S100 or may include a narrower band than the communication band, depending on the type of a reference signal. As a specific example, in some embodiments, when the reference signal is a CRS in an LTE network-based RAT, the wideband may be identical to the communication band, and when the reference signal is a TRS in an NR network-based RAT, the wideband may be narrower than the communication band.

In operation S120, the UE 100 may perform interference measurement operations on the reference signal in second target subbands other than the first target subband allocated to the UE 100 in the wideband. In an embodiment, the UE 100 may perform interference measurement operations for determining whether PDSCHs transmitted in the second target subbands respectively cause interference to the reference signal in the second target subbands. As a specific example, in some embodiments, the UE 100 may measure an SINR or NIV of the reference signal in the second target subbands. The UE 100 may determine whether interference is present for each of the second target bands by comparing corresponding SINR or NIV measurement values in the second target subbands with a SINR threshold or a NIV threshold.

In operation S130, the UE 100 may perform a channel measurement operation for the first target subband based on the reference signal and interference measurement results obtained by operation S120. In an embodiment, the UE 100 may perform a first channel measurement operation based on the reference signal in the first target subband, perform a second channel measurement operation based on the reference signal in a second target subband in which interference is determined to be absent, and interpolate a first channel measurement result generated by performing the first channel measurement operation, based on a second channel measurement result generated by performing the second channel measurement operation. For example, the interpolated first channel measurement result may be a channel measurement result obtained by performing the channel measurement operation in operation S130. In an embodiment, the UE 100 may apply a weight to the second channel measurement result generated based on the reference signal in a second target subband in which interference is determined to be present and use a weighted second channel measurement result in the channel measurement operation performed in operation S130. In some embodiments, the UE 100 may also apply a weight to the second channel measurement result generated based on the reference signal in the second target subband in which interference is determined to be absent and use a weighted second channel measurement result in the channel measurement operation performed in operation S130. In this case, the weight applied may vary depending on whether interference is present.

In operation S140, the UE 100 may perform a communication operation based on a channel measurement result obtained via operation S130.

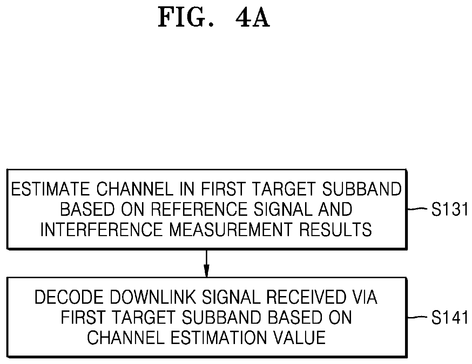

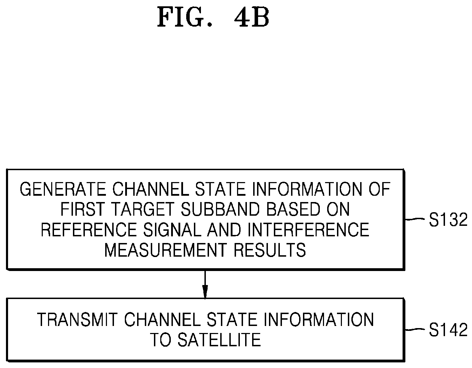

FIGS. 4A and 4B are flowcharts illustrating examples of operation S130 and operation S140 of the operation method FIG. 3, respectively, according to some embodiments.

Referring to FIG. 4A, in operation S131, the UE 100 may estimate a channel in the first target subband based on the reference signal and the interference measurement results. For example, the UE 100 may generate a first channel estimation value based on the reference signal in the first target subband, generate a second channel estimation value based on the reference signal in a second target subband in which interference is determined to be absent, and interpolate the first channel estimation value based on the second channel estimation value. In this case, the interpolated first channel estimation value may be a channel estimation value obtained as a result of operation S131. In some embodiments, the UE 100 may set an interference whitening filter for the first target subband based on the reference signal and the interference measurement results, and perform interference whitening on a channel estimation value obtained as a result of operation S131 based on the interference whitening filter. In some embodiments, the UE 100 may measure time correlation parameters, such as Doppler frequency and center frequency offset, in the first target subband based on the reference signal and the interference measurement results, and adjust the interference whitening filter based on results of the measurement.

In operation S141, the UE 100 may decode a downlink signal (or PDSCH) received over the first target subband based on a channel estimation value obtained as a result of operation S131.

Referring to FIG. 4B, in operation S132, the UE 100 may generate channel state information of the first target subband based on the reference signal and the interference measurement results. In an embodiment, the UE 100 may generate a channel state measurement value by measuring parameters related to a channel state, such as received signal received power (RSRP), SINR, etc., in the first target subband based on the reference signal and the interference measurement results, and generate channel state information based on the channel state measurement value. For example, the UE 100 may generate a first channel state measurement value based on the reference signal in the first target subband, generate a second channel state measurement value based on the reference signal in a second target subband in which interference is determined to be absent, and interpolate the first channel state measurement value based on the second channel state measurement value. In this case, the interpolated first channel state measurement value may be used as a reference in generating the channel state information in operation S132.

In operation S142, the UE 100 may transmit (or report) the channel state information to the satellite 10. In an embodiment, the channel state information may include at least one of a rank indication (RI), a precoder matrix indication (PMI), or a channel-quality indication (CQI).

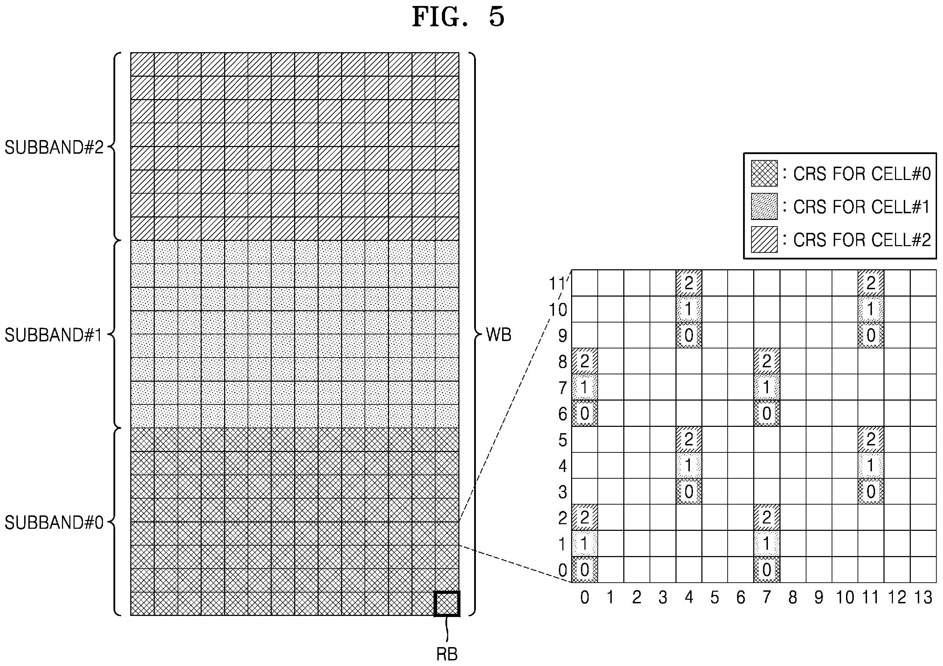

FIG. 5 is a diagram illustrating a wideband WB and subbands SUBBAND#0, SUBBAND#1, and SUBBAND#2 according to an embodiment. In FIG. 5, it is assumed that a reference signal is a CRS, and the wideband WB includes three subbands, i.e., a first subband SUBBAND#0, a second subband SUBBAND#1, and a third subband SUBBAND#2. However, a description provided with reference to FIG. 5 is only an embodiment, and embodiments are not limited thereto, and various embodiments may be applied to various reference signals, and the wideband WB may include more subbands depending on the number of cells provided by a satellite.

Referring to FIG. 5, the wideband WB may include the first to third subbands SUBBAND#0, SUBBAND#1, and SUBBAND#2. The satellite may communicate with the first to third cells CELL#0, CELL#1, and CELL#2, and allocate the first subband SUBBAND#0 to the first cell CELL#0, allocate the second subband SUBBAND#1 to the second cell CELL#1, and allocate the third subband SUBBAND#2 to the third cell CELL#2.

The first to third subbands SUBBAND#0, SUBBAND#1, and SUBBAND#2 may each include a plurality of resource blocks (RBs). An RB in the first subband SUBBAND#0 may include first CRS symbols 0 allocated to the first cell CELL#0 and arranged in a first pattern, second CRS symbols 1 allocated to the second cell CELL#1 and arranged in a second pattern, and third CRS symbols 2 allocated to the third cell CELL#2 and arranged in a third pattern.

For example, when a UE is connected to the second cell CELL#1, the UE may receive a PDSCH via the second subband SUBBAND#1. In this case, the second subband SUBBAND#1 may be referred to as a first target subband, and the first subband SUBBAND#0 and the third subband SUBBAND#2 may be referred to as second target subbands. When performing a channel measurement operation for the second subband SUBBAND#1, the UE may use the second CRS symbols 1 arranged in the wideband and allocated to the second cell CELL#1 (or the UE). For example, the second CRS symbols 1 in the first subband SUBBAND#0 may be interfered with by a PDSCH transmitted via the first subband SUBBAND#0. However, because the PDSCH is not always transmitted via the first subband SUBBAND#0, the UE may determine whether the PDSCH is transmitted via the first subband SUBBAND#0 to cause interference to the second CRS symbols 1 by measuring interference to the second CRS symbols 1 in the first subband SUBBAND#0.

In an embodiment, the UE may selectively use the second CRS symbols 1 arranged in the first subband SUBBAND#0 and the third subband SUBBAND#2 in the channel measurement operation for the second subband SUBBAND#1 based on whether there is interference to the reference signal, i.e., the second CRS symbols 1, in the first subband SUBBAND#0 and the third subband SUBBAND#2, which are the second target subbands.

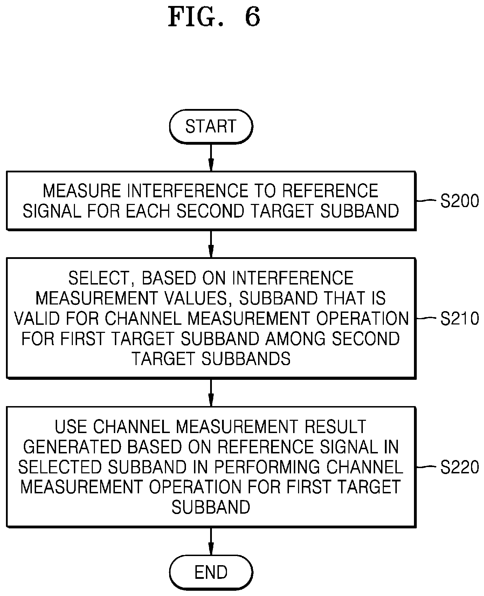

FIG. 6 is a flowchart of an operation method of a UE, according to an embodiment.

Referring to FIG. 6, in operation S200, the UE may measure interference to a reference signal for each second target subband. For example, in some embodiments, the UE may measure an interference measurement value of the reference signal for each second target subband.

In operation S210, the UE may select, based on the interference measurement values generated by operation S200, a subband that is valid for the channel measurement operation for the first target subband among the second target subbands. As a specific example, in an embodiment, the UE may compare the interference measurement values with a threshold, and select, based on results of the comparison, a subband in which interference is absent among the second target subbands as a valid subband.

In operation S220, the UE may use a channel measurement result generated based on the reference signal in the subband selected in operation S210 for the channel measurement operation for the first target subband. As a specific example, in an embodiment, the channel measurement operation performed by the UE may include operations of generating a first channel measurement result by performing a first channel measurement operation based on the reference signal in the first target subband, generating a second channel measurement result by performing a second channel measurement operation based on the reference signal in the selected subband, and interpolating the first channel measurement result based on the second channel measurement result.

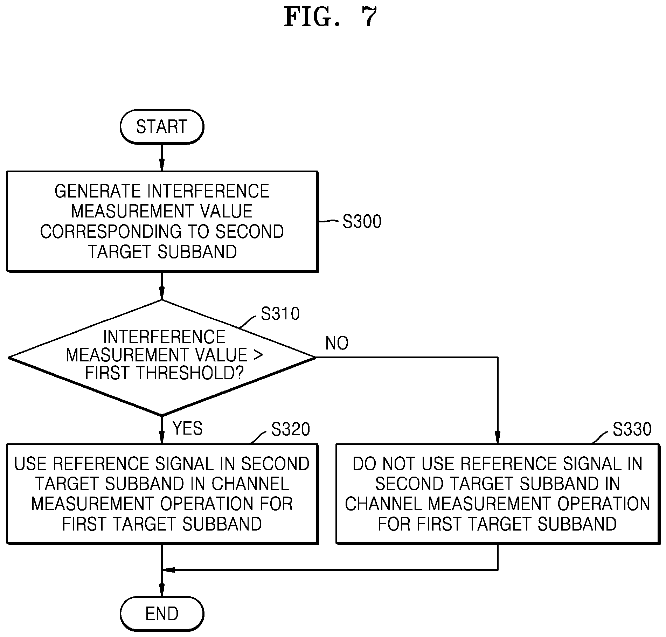

FIG. 7 is a flowchart of an operation method of a UE, according to an embodiment.

Referring to FIG. 7, in operation S300, the UE may generate an interference measurement value corresponding to a second target subband. As a specific example, in an embodiment, the UE may generate an interference measurement value by measuring interference to a reference signal in the second target subband.

In operation S310, the UE may determine whether the interference measurement value is greater than a first threshold. For example, the interference measurement value may be an SINR-related measurement value, and in this case, a higher interference measurement value may indicate less interference. In some embodiments, when the interference measurement value is an NIV-related measurement value, a higher interference measurement value may indicate greater interference, and accordingly, in operation S310, it may be determined whether the interference measurement value is less than the first threshold.

When the interference measurement value is greater than the first threshold ('YES' in operation S310), the UE may subsequently perform operation S320 in which the UE may use the reference signal in the second target subband in a channel measurement operation for a first target subband.

When the interference measurement value is not greater than (i.e., is less than or equal to) the first threshold ('NO' in operation S310), the UE may subsequently perform operation S330 in which the UE may not use the reference signal in the second target subband in a channel measurement operation for a first target subband. That is, the reference signal in the second target subband may be processed as invalid for the channel measurement operation for the first target subband.

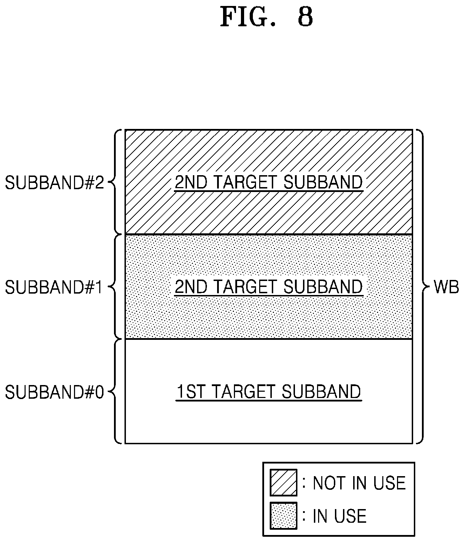

FIG. 8 is a diagram illustrating an example of using the reference signal in the second target subbands in conjunction with the operation method of FIG. 7, according to an embodiment. In FIG. 8, a wideband WB may include a first subband SUBBAND#0, a second subband SUBBAND#1, and a third subband SUBBAND#2.

Referring to FIG. 8, the UE may be assigned the first subband SUBBAND#0, and the first subband SUBBAND#0 may be a first target subband, and the second subband SUBBAND#1 and the third subband SUBAND#2 may be second target subbands. In this case, a PDSCH may not be transmitted via the second subband SUBBAND#1, and a PDSCH may be transmitted via the third subband SUBBAND#2.

In an embodiment, the UE may measure interference to the reference signal in the second subband SUBBAND#1 to determine that interference is absent, and perform the channel measurement operation for the first subband SUBBAND#0 by using the reference signal in the second subband SUBBAND#1.

In an embodiment, the UE may measure interference to the reference signal in the third subband SUBBAND#2 to determine that interference is present, and may process the reference signal in the third subband SUBBAND#2 as invalid so that the reference signal is not used in the channel measurement operation for the first subband SUBBAND#0.

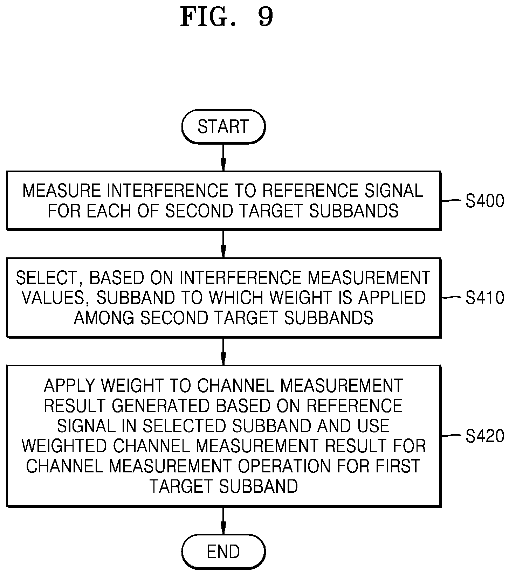

FIG. 9 is a flowchart of an operation method of a UE, according to an embodiment.

Referring to FIG. 9, in operation S400, the UE may measure interference to a reference signal for each of the second target subbands.

In operation S410, the UE may select, based on interference measurement values generated by operation S400, a subband to which a weight is applied among the second target subbands. As a specific example, in an embodiment, the UE may compare the interference measurement values with a threshold and select, based on results of the comparison, a subband in which interference is present among the second target subbands to which to apply the weight.

In operation S420, the UE apply a weight to a channel measurement result generated based on the reference signal in the subband selected in operation S410, and then use a weighted channel measurement result for the channel measurement operation for the first target subband. As a specific example, in an embodiment, the channel measurement operation performed by the UE may include operations of generating a first channel measurement result by performing a first channel measurement operation based on the reference signal in the first target subband, generating a second channel measurement result by performing a second channel measurement operation based on the reference signal in the selected subband, applying a weight to the second channel measurement result, and interpolating the first channel measurement result based on a weighted second channel measurement result.

In some embodiments, the UE may use a channel measurement result corresponding to the second target subband in which interference is absent in the channel measurement operation for the first target subband without applying a weight to the channel measurement result.

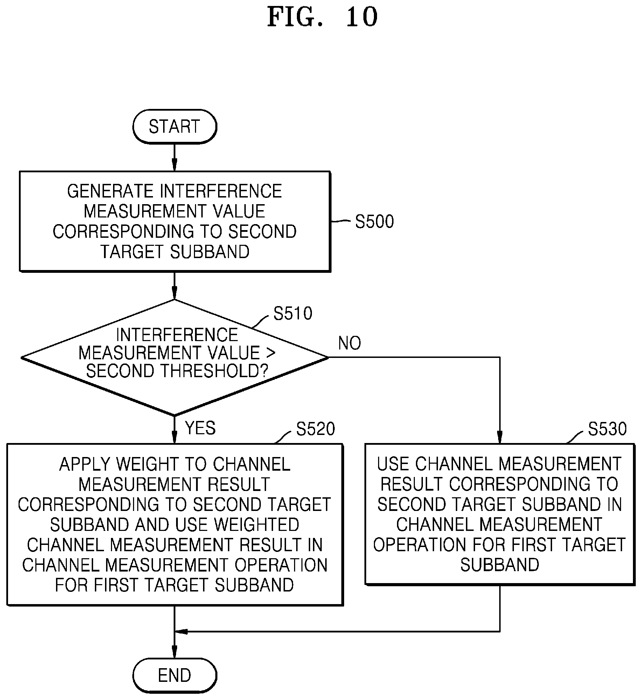

FIG. 10 is a flowchart of an operation method of a UE, according to an embodiment.

Referring to FIG. 10, in operation S500, the UE may generate an interference measurement value corresponding to a second target subband. For example, in an embodiment, the UE may measure interference corresponding to the second target subband and generate the interference measurement value based on the measured interference.

In operation S510, the UE may determine whether the interference measurement value is greater than a second threshold. For example, the interference measurement value may be an SINR-related measurement value, and in this case, a higher interference measurement value may indicate less interference. In some embodiments, when the interference measurement value is an NIV-related measurement value, a higher interference measurement value may indicate greater interference, and accordingly, in operation S510, it may be determined whether the interference measurement value is less than or equal to the second threshold.

When the interference measurement value is greater than the second threshold ('YES' in operation S510), the UE may subsequently perform operation S520 in which the UE may apply a weight to a channel measurement result corresponding to the second target subband and use a weighted channel measurement result in a channel measurement operation for a first target subband.

When the interference measurement value is not greater than (i.e., is less than or equal to) the second threshold ('NO' in operation S510), the UE may subsequently perform operation S530 in which the UE may fully use a channel measurement result corresponding to the second target subband in a channel measurement operation for a first target subband.

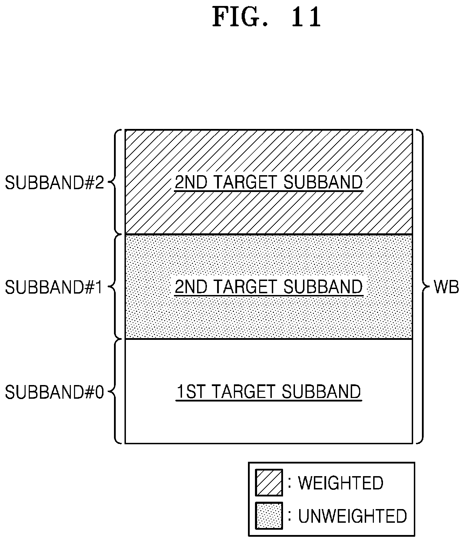

FIG. 11 is a diagram illustrating an example of using a reference signal in the second target subbands in conjunction with the operation method of FIG. 10, according to an embodiment. In FIG. 11, a wideband WB may include a first subband SUBBAND#0, a second subband SUBBAND#1, and a third subband SUBBAND#2.

Referring to FIG. 11, the UE may be assigned the first subband SUBBAND#0, and the first subband SUBBAND#0 may be a first target subband, and the second subband SUBBAND#1 and the third subband SUBAND#2 may be second target subbands. In this case, a PDSCH may not be transmitted via the second subband SUBBAND#1, and a PDSCH may be transmitted via the third subband SUBBAND#2.

In an embodiment, the UE may measure interference to the reference signal in the second subband SUBBAND#1 to determine that interference is absent, and perform the channel measurement operation for the first subband SUBBAND#0 by fully using a channel measurement result generated based on the reference signal in the second subband SUBBAND#1.

In an embodiment, the UE may measure interference to the reference signal in the third subband SUBBAND#2 to determine that interference is present, and apply a weight to a channel measurement result generated based on the reference signal in the third subband SUBBAND#2 and use a weighted channel measurement result in the channel measurement operation for the first target subband SUBBAND#0.

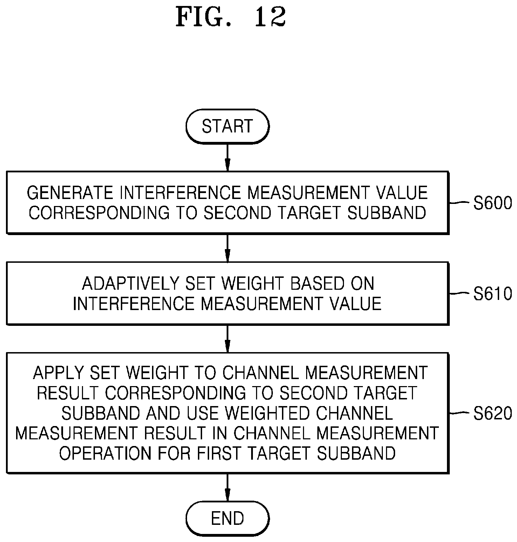

FIG. 12 is a flowchart of an operation method of a UE, according to an embodiment.

Referring to FIG. 12, in operation S600, the UE may generate an interference measurement value corresponding to a second target subband. For example, in an embodiment, the UE may measure interference corresponding to the second target subband and generate the interference measurement value based on the measured interference.

In operation S610, the UE may adaptively set a weight based on the interference measurement value. In some embodiments, the UE may select a weight corresponding to an interference measurement value by referring to a weight table.

In operation S620, the UE may apply the set weight to a channel measurement result corresponding to a second target subband and use a weighted channel measurement result for a channel measurement operation for a first target subband.

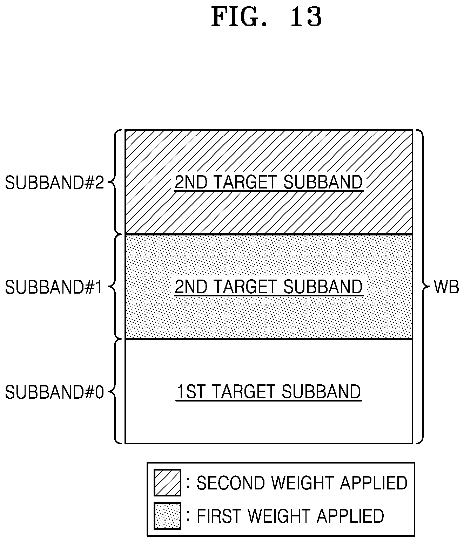

FIG. 13 is a diagram illustrating an example of using a reference signal in second target subbands in conjunction with the operation method of FIG. 12, according to an embodiment. In FIG. 13, a wideband WB may include a first subband SUBBAND#0, a second subband SUBBAND#1, and a third subband SUBBAND#2.

Referring to FIG. 13, the UE may be assigned the first subband SUBBAND#0, and the first subband SUBBAND#0 may be a first target subband, and the second subband SUBBAND#1 and the third subband SUBAND#2 may be second target subbands. In this case, a PDSCH may be transmitted via the second subband SUBBAND#1, and a PDSCH may be transmitted via the third subband SUBBAND#2.

In an embodiment, the UE may measure interference to the reference signal in the second subband SUBBAND#1 to determine that interference is present, and apply a first weight to a channel measurement result generated based on the reference signal in the second subband SUBBAND#1 and use a weighted channel measurement result in the channel measurement operation for the first target subband SUBBAND#0. The first weight may be based on an interference measurement value corresponding to the second subband SUBBAND#1.

In an embodiment, the UE may measure interference to the reference signal in the third subband SUBBAND#2 to determine that interference is present, and apply a second weight to a channel measurement result generated based on the reference signal in the third subband SUBBAND#2 and use a weighted channel measurement result in the channel measurement operation for the first target subband SUBBAND#0. The second weight may be based on an interference measurement value corresponding to the third subband SUBBAND#2.

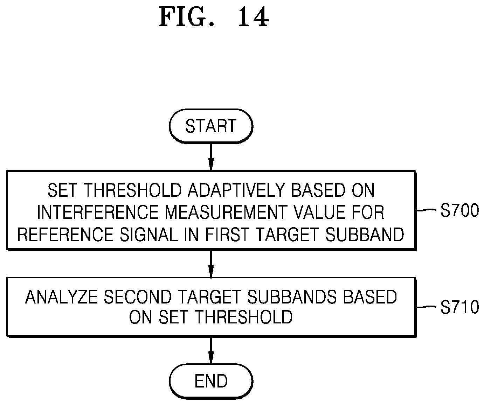

FIG. 14 is a flowchart of an operation method of a UE, according to an embodiment.

Referring to FIG. 14, in operation S700, the UE may adaptively set a threshold based on an interference measurement value for a reference signal in a first target subband. The threshold may be a value used as a reference in determining whether there is interference to the reference signal in second target subbands. As a specific example, in an embodiment, when the interference measurement value corresponding to the first target subband indicates high interference, the UE may set a threshold to actively utilize the reference signal in the second target subbands. When the interference measurement value corresponding to the first target subband indicates low interference, the UE may set a threshold to passively utilize the reference signal in the second target subbands. For example, when the interference measurement value and the threshold are SINR-related measurement values, the higher the interference measurement value corresponding to the first target subband, the higher the threshold that may be set by the UE.

In operation S710, the UE may analyze the second target subbands based on the threshold set in operation S700. As a specific example, the UE may determine, based on the set threshold, whether there is interference to the reference signal in the second target subbands.

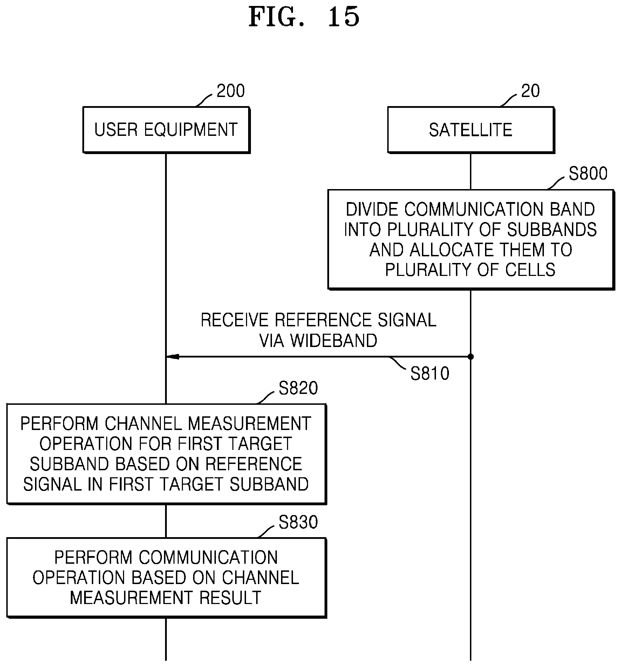

FIG. 15 is a flowchart of an operation method of a UE in a wireless communication system, according to an embodiment. The wireless communication system in FIG. 15 may include a UE 100 and a satellite 10.

Referring to FIG. 15, in operation S800, the satellite 20 may divide a communication band into a plurality of subbands and allocate the plurality of subbands to a plurality of cells.

In operation S810, the UE 200 may receive a reference signal via a wideband. In an embodiment, a reference signal is a signal assigned to enable the UE 200 to perform a channel measurement operation for a first target subband, and may include reference signal symbols arranged in a pattern on resources included in the wideband. In an embodiment, the pattern may be predetermined. In an embodiment, the wideband may be the same as the communication band in operation S800 or may include a narrower band than the communication band, depending on the type of a reference signal. As a specific example, in some embodiments, when the reference signal is a CRS in an LTE network-based RAT, the wideband may be identical to the communication band, and when the reference signal is a TRS in an NR network-based RAT, the wideband may be narrower than the communication band.

In operation S820, the UE 200 may perform a channel measurement operation for a first target subband based on a reference signal in the first target subband. As a specific example, in an embodiment, the UE 200 may extract a reference signal in the first target subband from a reference signal received via a wideband in operation S810, and perform a channel measurement operation for the first target subband by using the extracted reference signal. That is, in an embodiment, the UE 200 may not use the reference signal in the second target subbands of the wideband for the channel measurement operation for the first target subband.

In operation S830, the UE 100 may perform a communication operation based on a channel measurement result obtained by operation S820.

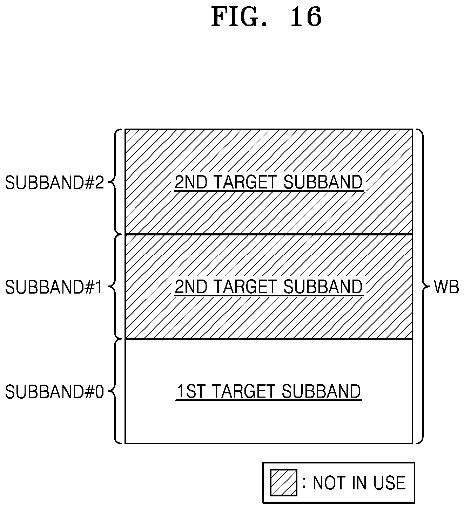

FIG. 16 is a diagram illustrating an example of not using a reference signal in second target subbands in conjunction with the operation method of FIG. 15, according to an embodiment. In FIG. 16, a wideband WB may include a first subband SUBBAND#0, a second subband SUBBAND#1, and a third subband SUBBAND#2.

Referring to FIG. 16, the UE may be assigned the first subband SUBBAND#0, and the first subband SUBBAND#0 may be a first target subband, and the second subband SUBBAND#1 and the third subband SUBAND#2 may be second target subbands.

In an embodiment, the UE may not use the reference signal in the second target subbands in performing the channel measurement operation for the first target subband. In other words, the UE may immediately ignore the reference signal in the second target subbands without determining whether interference exists in the second target subbands.

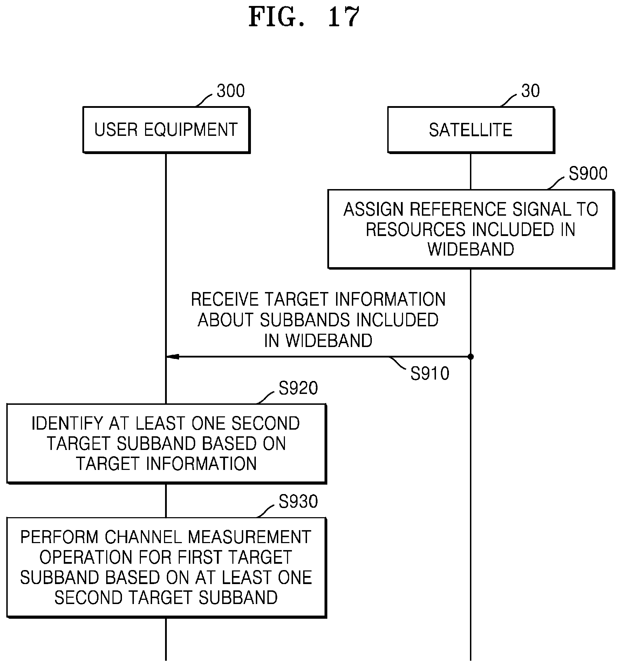

FIG. 17 is a flowchart of an operation method of a UE in a wireless communication system, according to an embodiment. The wireless communication system in FIG. 17 may include a UE 300 and a satellite 30.

Referring to FIG. 17, in operation S900, the satellite 30 may assign a reference signal to resources included in the wideband. The reference signal may be a signal assigned to the UE 300 for a channel measurement operation performed by the UE 300 for the first target subband.

In operation S910, the UE 300 may receive target information regarding subbands included in the wideband. As a specific example, in an embodiment, the target information may include information indicating positions of the subbands on the frequency axis. In an embodiment, the UE 300 may receive the target information during radio resource control (RRC) signaling with a cell provided by the satellite 30.

In operation S920, the UE 300 may identify at least one second target subband included in the wideband based on the target information. As a specific example, in an embodiment, the UE 300 may identify a position of the at least one second target subband.

In operation S930, the UE 300 may perform a channel measurement operation for the first target subband based on the at least one second target subband identified in operation S920. As a specific example, in an embodiment, based on whether there is interference to the reference signal in the identified at least one second target subband, the UE 300 may determine whether to use the corresponding reference signal for the channel measurement operation for the first target subband.

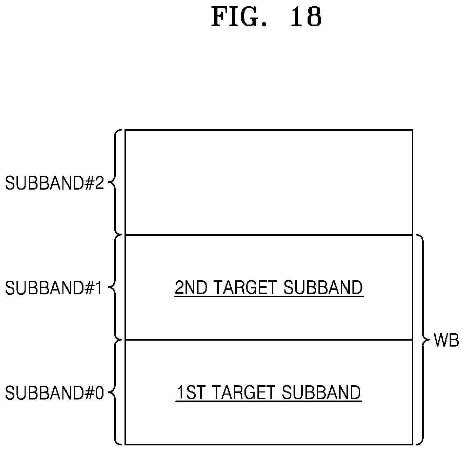

FIG. 18 is a diagram illustrating a wideband WB according to an embodiment.

Referring to FIG. 18, the wideband WB may include a first subband SUBBAND#0 and a second subband SUBBAND#1. For example, a UE may be assigned the first subband SUBBAND#0, and the first subband SUBBAND#0 may be a first target subband, and the second subband SUBBAND#1 may be a second target subband.

In an embodiment, a satellite may configure the wideband WB according to a type of a reference signal, and the satellite may provide target information to the UE so that the UE may identify the first subband SUBBAND#0 and the second subband SUBBAND#1 included in the wideband WB.

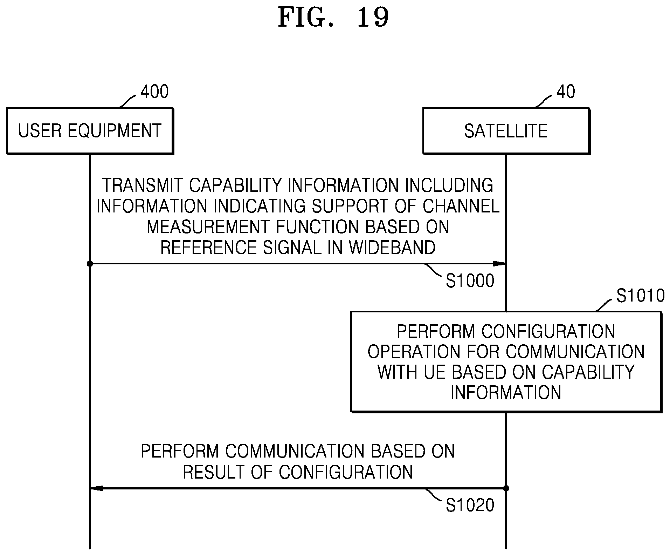

FIG. 19 is a flowchart of an operation method of a UE 400 in a wireless communication system, according to an embodiment.

Referring to FIG. 19, in operation S1000, the UE 400 may transmit, to a satellite 40, capability information including information indicating that the UE 400 supports a channel measurement function based on a reference signal in a wideband. The corresponding channel measurement function may be a function related to the channel measurement operation for the first target subband according to the embodiment described above.

In operation S1010, the satellite 40 may perform a configuration operation for communication with the UE 400 based on the capability information. In an embodiment, the configuration operation may include a configuration operation for the wideband and a configuration operation for various communication parameters based on high channel measurement reliability due to the support of the channel measurement function in the UE 400.

In operation S1020, the UE 400 and the satellite 40 may perform communication based on a result of the configuration operation in operation S1010. The UE 400 may perform a channel measurement operation for the first target subband based on the channel measurement function activated during the communication.

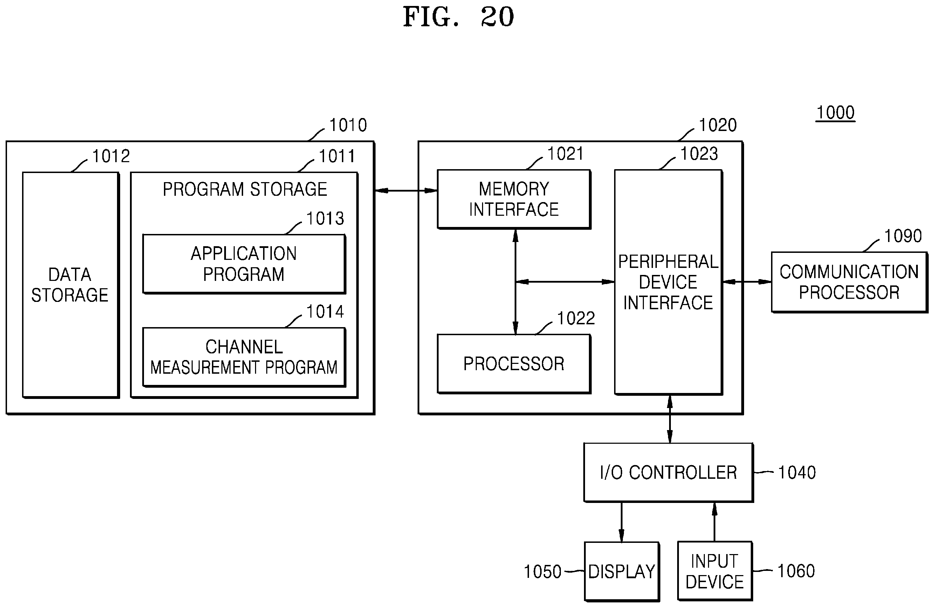

FIG. 20 is a block diagram of an electronic device 1000 according to an embodiment.

Referring to FIG. 20, the electronic device 1000 may include a memory 1010, a processor circuit 1020, an input/output (I/O) controller 1040, a display 1050, an input device 1060, and a communication processor 1090. In some embodiments, the memory 1010 may be configured as a plurality of memories. Configurations and functions of the components are described.

The memory 1010 may include a program storage 1011 for storing programs for controlling an operation of the electronic device 1000 and a data storage 1012 for storing data generated during execution of the programs. The data storage 1012 may store data for operations of an application program 1013 and for operations of a channel measurement program 1014. In an embodiment, the data storage 1012 may store information for performing channel measurement operations according to embodiments. As a specific example, the information may include information about thresholds for determining whether interference is present in a second target subband and information about weights to be used in the channel measurement operations for the first target subband.

The program storage 1011 may include the application program 1013 and the channel measurement program 1014. In this case, the programs included in the program storage 1011 may be sets of instructions and may also be referred to as instruction sets. The application program 1013 may include program code for executing various applications operating on the electronic device 1000. In other words, the application program 1013 may include code (or commands) for various applications run by a processor 1022. The channel measurement program 1014 may include control code for performing channel measurement operations for the first target subband according to embodiments.

In an embodiment, the processor 1022 may access the memory 1010 and execute the channel measurement program 1014 to perform a channel measurement operation for the first target subband based on whether there is interference to a reference signal in the second target subbands.

The electronic device 1000 may include the communication processor 1090 that performs communication functions for voice communication and data communication. The processor 1022 may receive a reference signal from a satellite via a wideband by using the communication processor 1090. Furthermore, by using the communication processor 1090, the processor 1022 may receive the above-described target information from the satellite or transmit the above-described capability information to the satellite.

A peripheral device interface 1023 may control connections among the I/O controller 1040, the communication processor 1090, the processor 1022, and a memory interface 1021. The processor 1022 may control a plurality of cells to provide services by using at least one software program. In this case, the processor 1022 may execute at least one program stored in the memory 1010 to provide a service corresponding to the program.

The I/O controller 1040 may provide an interface between I/O devices, such as the display 1050 and the input device 1060, and the peripheral device interface 1023. The display 1050 may display status information, input characters, moving pictures, still pictures, etc. For example, the display 1050 may display information about an application program executed by the processor 1022.

The input device 1060 may provide input data generated due to a selection by the electronic device 1000 to the processor circuit 1020 via the I/O controller 1040. In some embodiments, the input device 1060 may include a keypad including at least one hardware button, a touch pad for sensing touch information, etc. For example, the input device 1060 may provide the processor 1022 with touch information, such as a touch, a touch movement, and a touch release detected via the touch pad, via the I/O controller 1040.

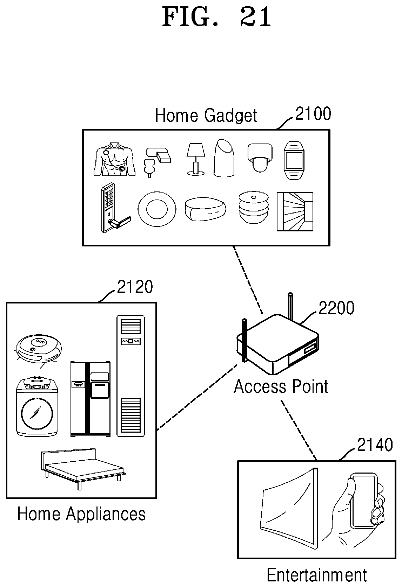

FIG. 21 is a diagram illustrating communication devices for performing a channel measurement operation, according to an embodiment.

Referring to FIG. 21, a home gadget 2100, a home appliance 2120, an entertainment device 2140, and an access point (AP) 2200 may communicate with each other. At least one of the home gadget 2100, the home appliance 2120, the entertainment device 2140, or the AP 2200 may generate a highly reliable channel measurement result by performing a channel measurement operation according to embodiments, and perform communication based on the channel measurement result.

In some embodiments, the home gadget 2100, the home appliance 2120, the entertainment device 2140, and the AP 2200 may constitute an Internet of Things (IoT) network system. The communication devices illustrated in FIG. 21 are only an example, and it will be understood that other communication devices not illustrated in FIG. 21 may also include a wireless communication device according to an embodiment.

Embodiments have been set forth above in the drawings and the specification. Although embodiments have been described using specific terms in the present specification, these terms are used only for the purpose of explaining the various embodiments, and are not used to limit the meaning or the scope of the appended claims. Therefore, one of ordinary skill in the art will understand that various changes in form and details may be made therein and equivalent other embodiments are possible therefrom. Accordingly, the true scope of the various embodiments should be defined by the technical idea of the appended claims.

While various embodiments have been particularly shown and described with reference to the drawings, it will be understood that various changes in form and details may be made therein without departing from the scope of the following claims.

## Claims

1. An operation method comprising:
receiving a reference signal assigned to a user equipment (UE) from a satellite that communicates via wideband with the UE in a non-terrestrial network;
performing an interference measurement operation on the reference signal in a second target subband other than a first target subband allocated to the UE in the wideband;
performing a channel measurement operation for the first target subband based on the reference signal and an interference measurement result from the interference measurement operation; and
performing a communication operation based on a channel measurement result from the channel measurement operation.

2. The operation method of claim 1, wherein the reference signal includes reference signal symbols arranged in a pattern in the wideband.

3. The operation method of claim 1 or claim 2, wherein the interference measurement operation comprises:
measuring interference to the reference signal in the second target subband to generate an interference measurement value; and
generating the interference measurement result that indicates whether the interference is present according to a comparison of the interference measurement value with a threshold.

4. The operation method of claim 3, wherein the interference measurement value comprises at least one of a signal to interference plus noise ratio (SINR) or a noise interference variance (NIV).

5. The operation method of claim 3 or claim 4, wherein the threshold is based on an interference measurement value for the reference signal in the first target subband.

6. The operation method of any of claims 3-5, wherein the channel measurement operation comprises:
based on the interference measurement result indicating an absence of the interference to the reference signal in the second target subband, the channel measurement operation is performed using the channel measurement result generated based on the reference signal in the second target subband.

7. The operation method of any of claims 3-6, wherein the channel measurement operation comprises:
based on the interference measurement result indicating a presence of the interference to the reference signal in the second target subband, the channel measurement operation is performed by processing the reference signal in the second target subband as invalid for the channel measurement operation.

8. The operation method of any of claims 3-6, wherein the channel measurement operation comprises:
based on the interference measurement result indicating a presence of the interference to the reference signal in the second target subband, applying a weight to the channel measurement result generated based on the reference signal in the second target subband to generate a weighted channel measurement result, and using the weighted channel measurement result as the channel measurement result in the channel measurement operation.

9. The operation method of any preceding claim, wherein the channel measurement operation comprises:
performing a first channel measurement operation by using the reference signal in the first target subband;
based on the interference measurement result indicating an absence of interference to the reference signal in the second target subband, performing a second channel measurement operation by using the reference signal in the second target subband; and
generating the channel measurement result, based on a first channel measurement result generated according to the first channel measurement operation and a second channel measurement result generated according to the second channel measurement operation.

10. The operation method of any preceding claim, wherein:
the channel measurement operation comprises estimating a channel in the first target subband based on the reference signal and the interference measurement result to generate a channel estimation value for the first target subband, and
the communication operation comprises decoding a downlink signal received via the first target subband based on the channel estimation value for the first target subband.

11. The operation method of any preceding claim, wherein:
the channel measurement operation comprises generating channel state information of the first target subband based on the reference signal and the interference measurement result, and
the communication operation comprises transmitting the channel state information to the satellite.

12. The operation method of any preceding claim, wherein the reference signal corresponds to one of a cell-specific reference signal and a tracking reference signal.

13. The operation method of any preceding claim, further comprising:
receiving target information regarding the second target subband from the satellite; and
identifying the second target subband based on the target information.

14. The operation method of any preceding claim, further comprising:
transmitting, to the satellite, capability information including information that indicates whether the UE supports a channel measurement function based on the reference signal in the wideband.

15. An operation method comprising:
receiving a reference signal assigned to a user equipment (UE) from a satellite that communicates via wideband with the UE in a non-terrestrial network;
extracting, from the reference signal, a first target subband reference signal in a first target subband that is allocated to the UE in the wideband;
performing a channel measurement operation for the first target subband based on the first target subband reference signal that has been extracted; and
performing a communication operation based on a channel measurement result from the channel measurement operation.
